# EUROPEAN PATENT APPLICATION

(11) **EP 4 822 927 A1**
(43) Date of publication of application: **14.10.2026**
(21) Application number: 26737269.6
(22) Date of filing: 16.01.2026
(51) Int. Cl.: H02G 15/117, H02G 7/16, G02B 6/44

(54) **SPLICE CLOSURE AND SPLICE DEVICE FOR OPGW ICE-MELTING OPTICAL CABLE**

(30) Priority: 17.01.2025 CN 202510075472
(71) Applicant: Jiang Dong Fittings Equipment Co., Ltd., Nantong, Jiangsu 226463 (CN); Jiangsu Zhongtian Technology Co., Ltd., Nantong, Jiangsu 226463 (CN)
(72) Inventor: YE, Weiqing, Nantong, Jiangsu 226600 (CN); FU, Rong, Nantong, Jiangsu 226600 (CN); MAO, Xinguo, Nantong, Jiangsu 226600 (CN); LI, Xinxin, Nantong, Jiangsu 226600 (CN); WANG, Jingjing, Nantong, Jiangsu 226600 (CN); ZHAI, Qinghua, Nantong, Jiangsu 226600 (CN); LI, Xinchun, Nantong, Jiangsu 226600 (CN); YE, Peng, Nantong, Jiangsu 226600 (CN); JI, Peng, Nantong, Jiangsu 226600 (CN); LU, Xiaoxiao, Nantong, Jiangsu 226600 (CN)
(74) Representative: Forresters IP LLP
(86) International application number: PCT/CN2026/073181
(87) International publication number: WO 2026/153517

(57) **Abstract**

The present disclosure provides a joint box for an OPGW ice-melting optical cable and a joint device. The joint box for the OPGW ice-melting optical cable includes a housing, the housing being provided with a plurality of first cable inlets spaced apart from each other, and a plurality of optical cables being capable of extending into the housing through the plurality of first cable inlets; a support component arranged in the housing, the support component being configured to support the optical cables in the housing; and a current-carrying component arranged on the support component, the current-carrying component being configured to be electrically connected to conductive layers of the plurality of optical cables. The support component includes a mounting element; and a support element, the support element being arranged on the mounting element, the support element having a first side and a second side which are arranged oppositely, the first side being provided with the current-carrying component, the second side being provided with a fiber melting disc, the support element being provided with a plurality of limiting parts, the plurality of limiting parts being located between the first side and the second side, and each of the plurality of limiting parts being provided with a limiting channel. The technical solution of the present disclosure solves the problem of difficulty in bearing an ice melting voltage and carrying a current inside a joint box for an OPGW in the prior art.

## Description

The present disclosure claims priority to Patent Application No. 2025100754721, filed to the China National Intellectual Property Administration on January 17, 2025 and entitled "Joint Box for OPGW Ice-melting Optical Cable and Joint Device".

### Technical Field

The present disclosure relates to the technical field of optical cables, specifically to a joint box for an OPGW ice-melting optical cable and a joint device.

### Background

An OPGW (optical fiber composite overhead ground wire) is an optical cable widely used in a power system, combines the functions of a communication channel and a lightning conductor, is widely used in high-voltage power transmission lines, and is a main carrying mode for communication transmission in the power system. However, in recent years, there have been continuous occurrences of rain, snow and freezing disasters in China, causing a significant impact on OPGW ground lines and generating significant hidden danger to the safety of a power grid. In general, an OPGW and an iron tower are in tower-by-tower grounding, that is, the OPGW is connected to a pole of the iron tower, and the ice cannot be molten directly through the current, so that insulation modification is required for the OPGW. The insulation of the OPGW not only increases the construction cost (by calculation, the cost of construction materials is increased by 10000 yuan/kilometer), but also raises the construction requirements. Moreover, the insulation of the OPGW brings difficulties and potential safety hazards to the later operation and maintenance of lines.

An OPGW optical cable manufacturer has developed an OPGW capable of melting ice, that is, an insulating layer is arranged in the OPGW to achieve insulation between a conductor and outer-layer aluminum-coated steel single wires. The current is applied to the conductive layer to generate heat, and the heat is transferred to the outer layer of the OPGW to achieve ice melting of the OPGW. In this way, in a tower-by-tower grounding mode, ice melting of the OPGW optical cable can be achieved without insulating the OPGW. However, in the prior art, the OPGW joint box is only configured to perform traditional sealing and mechanical functions and configured to connect multiple sections of composite overhead ground wires, and the inside of the OPGW joint box is difficult to play a role in bearing an ice melting voltage and carrying a current. In this way, it is difficult to conduct the conductive layers of multiple composite overhead ground wires, and it is difficult to form a conductive path, so that it is difficult to timely melt the ice and snow on the OPGW optical cable.

### Summary

A main objective of the present disclosure is to provide a joint box for an OPGW ice-melting optical cable and a joint device, so as to solve the problem of difficulty in bearing an ice melting voltage and carrying a current inside the joint box for the OPGW in the prior art. In order to achieve the above objective, the present disclosure provides a joint box for an OPGW ice-melting optical cable. The joint box for the OPGW ice-melting optical cable includes a housing, the housing being provided with a plurality of first cable inlets spaced apart from each other, and a plurality of optical cables is capable of extending into the housing through the plurality of first cable inlets; a support component arranged in the housing, the support component being configured to support the optical cables in the housing, and the support component being made of an insulating material; and a current-carrying component arranged on the support component, the current-carrying component being made of a conductive material, and the current-carrying component being configured to be electrically connected to conductive layers of the plurality of optical cables. The support component includes a mounting element; and a support element, the support element being arranged on the mounting element, the support element having a first side and a second side which are arranged oppositely, the first side being provided with the current-carrying component, the second side being provided with a fiber melting disc, the support element being provided with a plurality of limiting parts, the plurality of limiting parts being located between the first side and the second side, each of the plurality of limiting parts being provided with a limiting channel, and a plurality of limiting channels and the plurality of first cable inlets being arranged correspondingly.

Further, the current-carrying component is provided with a plurality of clamping cavities, and the plurality of clamping cavities and the plurality of first cable inlets are arranged correspondingly.

Further, the current-carrying component includes a first clamping element, the first clamping element being provided with a plurality of first grooves; a second clamping element, the second clamping element being provided with a plurality of second grooves, the plurality of second grooves and the plurality of first grooves being arranged correspondingly, and each second groove and a corresponding first groove forming each clamping cavity; and a first connecting element configured to connect the first clamping element and the second clamping element.

Further, the current-carrying component includes a second connecting element, a plurality of through holes being provided in the second connecting element; and a plurality of annular contact fingers, each through hole is provided with the plurality of annular contact fingers , the second connecting element being electrically connected to the plurality of annular contact fingers, clamping cavities being formed in the annular contact fingers, and the plurality of annular contact fingers being spaced apart from each other along an axis direction of a corresponding through hole.

Further, the current-carrying component further includes a plurality of mounting cylinders, the plurality of mounting cylinders are correspondingly mounted in the plurality of through holes, an inner wall of a mounting through hole of each mounting cylinder is provided with a plurality of annular limiting grooves, an outer end of each annular contact finger is located in a corresponding annular limiting groove, an inner end of each annular contact finger protrudes from the corresponding annular limiting groove, and the plurality of annular contact fingers are electrically connected to the second connecting element through the plurality of mounting cylinders.

Further, the limiting parts include a plurality of first limiting plates and a plurality of second limiting plates, configured to form the limiting channels, and the first limiting plates and the second limiting plates are alternately arranged along an extending direction of the optical cables.

Further, at least part of the mounting element is provided with a plurality of umbrella-shaped structures, and the plurality of umbrella-shaped structures are spaced apart from each other along an axis direction of the mounting element.

Further, the housing includes a base and a cap cylinder, the base is connected to the cap cylinder, the support component is arranged on the base, the base is provided with the plurality of first cable inlets, and the support component and the current-carrying component are located in the cap cylinder.

Further, the base is provided with an annular groove, and the joint box for the OPGW ice-melting optical cable further includes: a sealing ring, the sealing ring being located between the cap cylinder and the base, and the sealing ring being used for sealed connection between the cap cylinder and the base; and an annular sealing element, the annular sealing element being located in the annular groove, the annular sealing element being located on an outer side of the sealing ring along a radial direction of the cap cylinder, and the annular sealing element being used for sealed connection between the cap cylinder and the base.

Further, the joint device for the OPGW ice-melting optical cable further includes a plurality of insulating sleeves, each of the plurality of insulating sleeves is arranged on the base, the each of the plurality of insulating sleeves is located between the base and the current-carrying component, the plurality of insulating sleeves and the plurality of first cable inlets are arranged correspondingly, and the each of the plurality of insulating sleeves includes: a main body; and a plurality of umbrella-shaped elements connected to an outer periphery of the main body, the plurality of umbrella-shaped elements being spaced apart from each other along an axis direction of the main body.

Further, the base is made of a metal material; and/or the cap cylinder is made of a non-metal material.

According to another aspect of the present disclosure, the present disclosure provides a joint device, including an optical cable clamp and the above joint box for the OPGW ice-melting optical cable. The optical cable clamp is connected to the joint box for the OPGW ice-melting optical cable.

Further, the optical cable clamp includes a third connecting element connected to the base, the third connecting element being provided with a plurality of second cable inlets spaced apart from each other, and the plurality of second cable inlets and the plurality of first cable inlets being arranged correspondingly; and a fourth connecting element, the fourth connecting element comprising a first plate segment, a second plate segment and a third plate segment which are sequentially connected and have included angles to enclose a clamping space, the first plate segment being connected to the base, and the third plate segment being connected to the third connecting element.

By applying the technical solutions in the present disclosure, the current-carrying component is provided, and the current-carrying component is electrically connected to the conductive layers of the plurality of optical cables. In this way, by electrifying the conductive layer of one of the plurality of optical cables, the current can flow from one of the plurality of optical cables to the rest of the plurality of optical cables by the current-carrying component, so as to conduct the plurality of optical cables. The inside of the joint box for the OPGW ice-melting optical cable can play a role in carrying a current, and the current can flow through all conductive layers of the plurality of optical cables. In this way, a conductive path can be formed, and the outer periphery of the conductive layer of the optical cable through which the current flows will generate heat, so as to melt the ice and snow covering the optical cable.

### Brief Description of the Drawings

The accompanying drawings of the specification, constituting a part of the present application, are used to provide a further understanding for the present disclosure. Exemplary embodiments of the present disclosure and descriptions thereof are used to explain the present disclosure, but do not constitute any improper limitation on the present disclosure. In the accompanying drawings:
Fig. 1 shows a structural schematic view of an embodiment of a joint device in the present disclosure;
Fig. 2 shows a schematic view of internal structures of an embodiment of the joint device in Fig. 1 (wherein a cap cylinder is not shown);
Fig. 3 shows a structural schematic view of the joint device in Fig. 2 from another perspective (wherein a current-carrying component in Embodiment 1 is shown);
Fig. 4 shows a structural schematic view of a joint box for an OPGW ice-melting optical cable of the joint device in Fig. 3 from another perspective;
Fig. 5 shows a partial cross-sectional view of the joint box for an OPGW ice-melting optical cable in Fig. 4;
Fig. 6 shows a top view of the joint box for an OPGW ice-melting optical cable in Fig. 4;
Fig. 7 shows a structural schematic view of an insulating sleeve of the joint box for an OPGW ice-melting optical cable in Fig. 4;
Fig. 8 shows a structural schematic view of a support component of the joint box for an OPGW ice-melting optical cable in Fig. 4 from one perspective;
Fig. 9 shows a structural schematic view of the support component in Fig. 8 from another perspective;
Fig. 10 shows a front view of the support component in Fig. 8
Fig. 11 shows a rear view of the support component in Fig. 8;
Fig. 12 shows a structural schematic view of an embodiment of an OPGW optical cable in the present disclosure; and
Fig. 13 shows a structural schematic view of Embodiment 2 of the current-carrying component of the joint device in Fig. 1.

The above accompanying drawings have the following reference numerals:
1. base; 2. optical cable clamp; 21. third connecting element; 22. fourth connecting element; 221. first plate segment; 222. second plate segment; 223. third plate segment; 3. cap cylinder; 4. optical cable; 41. outer-layer force-bearing single wire layer; 42. metal sheath; 43. insulating layer; 44. conductive layer; 45. optical fiber unit; 46. optical fiber; 5. fiber melting disc; 6. insulating sleeve; 61. main body; 62. umbrella-shaped element; 7. support component; 71. mounting seat; 72. umbrella-shaped structure; 73. support element; 74. clamping block; 81. mounting cylinder; 82. annular limiting groove; 83. annular contact finger; 9. sealing ring; 10. annular sealing element; 11. current-carrying component; 113. first connecting element; 12. first limiting plate; 13. second limiting plate.

### Detailed Description of the Embodiments

It should be noted that in the case of no conflict, embodiments in the present application and features in the embodiments may be combined with each other. The present disclosure will be described in detail below with reference to the accompanying drawings and in conjunction with the embodiments.

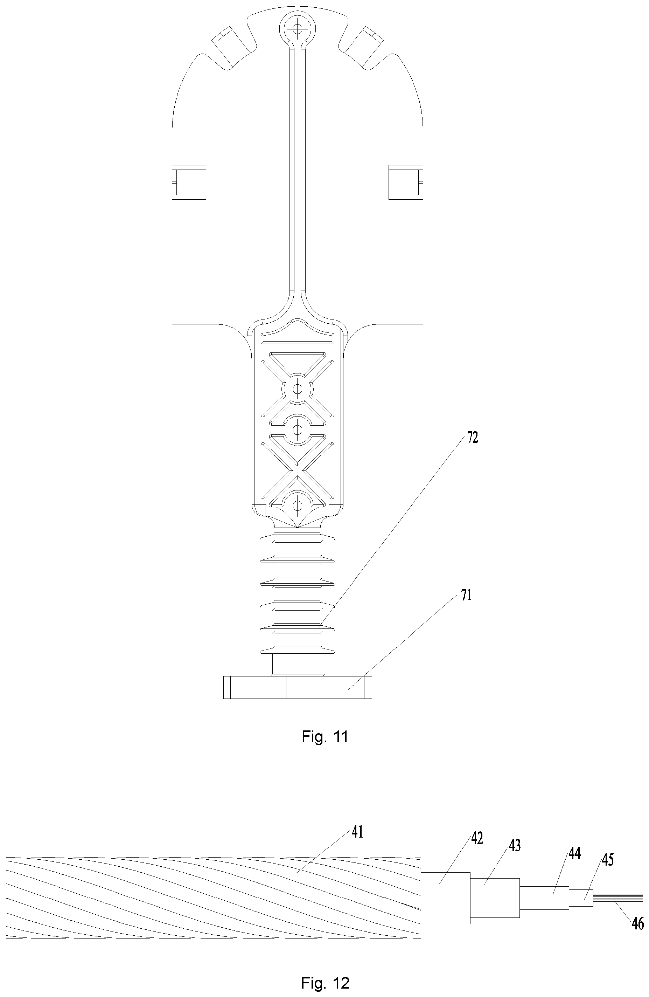

It should be noted that, as shown in Fig. 12, in the embodiments of the present disclosure, an optical cable 4 includes an outer-layer force-bearing single wire layer 41, a metal sheath 42, an insulating layer 43, a conductive layer 44 and an optical fiber unit 45 which are sleeved sequentially, wherein the optical fiber unit 45 includes a plurality of optical fibers 46.

Specifically, in the embodiments of the present disclosure, the outer-layer force-bearing single wire layer 41 includes outer-layer aluminum-coated steel single wires.

Specifically, in the embodiments of the present disclosure, as shown in Fig. 12, because the outermost layer of the optical cable 4 is the outer-layer force-bearing single wire layer 41 and the outer-layer force-bearing single wire layer 41 includes a plurality of single wires, sealing cannot be performed. Therefore, it is necessary to peel off the outer-layer force-bearing single wire layer 41, enable each optical cable 4 to pass through a corresponding second cable inlet and be fixed in the optical cable clamp 2, and place a conical sealing plug, a sealing gasket and a sealing screw cap sequentially on an inner wall surface of the first cable inlet of each optical cable 4, so as to seal the outer wall of the metal sheath 42 of the each optical cable 4. An insulating sleeve 6 is sleeved outside the insulating layer 43 of each optical cable 4, thereby further increasing the creep-age distance. Each clamping cavity of the current-carrying component 11 clamps the conductive layer 44 of each optical cable 4 to conduct the electrical performance of the conductive layer 44 of the optical cable 4. After the conductive layer 44 is fixed, an optical fiber protecting tube is sleeved outside the optical fiber unit 45, and the optical fiber protecting tube enters a fiber melting disc 5 after being limited in a limiting part of a support component 7, so as to perform fusion splicing and coiling of the optical fiber 46.

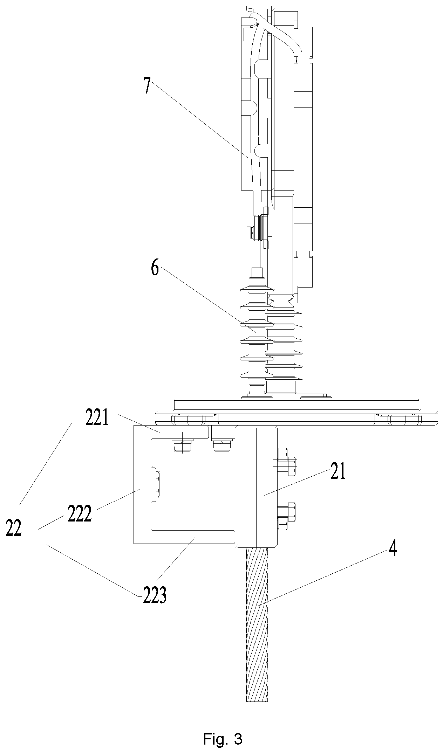

As shown in Fig. 3, Fig. 4 and Fig. 6, the present disclosure provides a joint box for an OPGW ice-melting optical cable. The joint box for an OPGW ice-melting optical cable includes a housing, the housing being provided with a plurality of first cable inlets spaced apart from each other, and a plurality of optical cables 4 extending into the housing through the plurality of first cable inlets; a support component 7 arranged in the housing, the support component 7 being configured to support the optical cables 4 in the housing, and the support component 7 being made of an insulating material; and a current-carrying component 11 arranged on the support component 7, the current-carrying component 11 being made of a conductive material, and the current-carrying component 11 being configured to be electrically connected to conductive layers of the plurality of optical cables 4.

In the above technical solution, the current-carrying component 11 is provided, and the current-carrying component 11 is electrically connected to the conductive layers of the plurality of optical cables 4. In this way, by electrifying the conductive layer of one of the plurality of optical cables 4, the current can flow from one of the plurality of optical cables 4 to the rest of the plurality of optical cables 4 by the current-carrying component 11, so as to conduct the plurality of optical cables 4. The inside of the joint box for the OPGW ice-melting optical cable can play a role in bearing an ice melting voltage and carrying a current, and the current can flow through all conductive layers of the plurality of optical cables 4. In this way, a conductive path can be formed, and the outer periphery of the conductive layer of the optical cable 4 through which the current flows will generate heat, so as to melt the ice and snow covering the optical cable 4.

In the embodiments of the present disclosure, two optical cables 4 are provided, two first cable inlets are provided, and each of the two optical cables 4 enters the joint box for the OPGW ice-melting optical cable from the corresponding first cable inlet.

Specifically, in the embodiments of the present disclosure, the material of the support component 7 may be one of rubber, plastic and ceramic.

Specifically, in the embodiments of the present disclosure, the material of the current-carrying component 11 is a metal, such as copper.

Specifically, in the embodiments of the present disclosure, a flow path of the conductive path is as follows: the current flows from one of the two optical cables 4 to the current-carrying component 11 through a power station, then flows from the current-carrying component 11 to the other one of the two optical cables 4, and finally flows from the other optical cable 4 to another power station or electricity user.

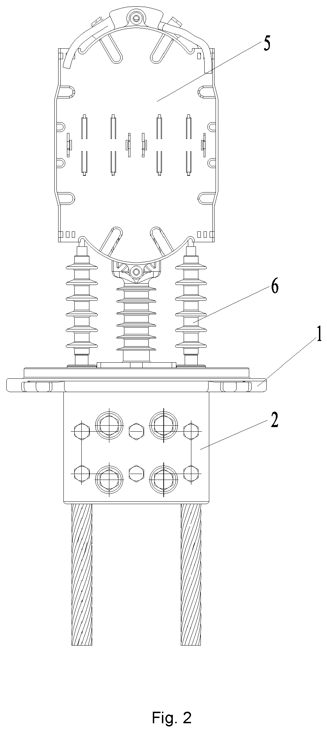

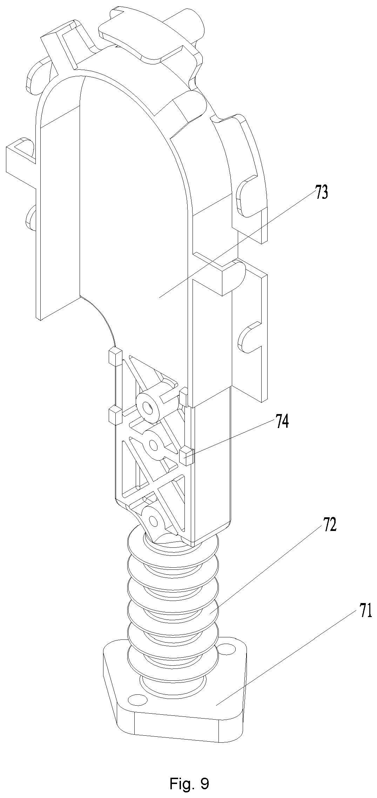

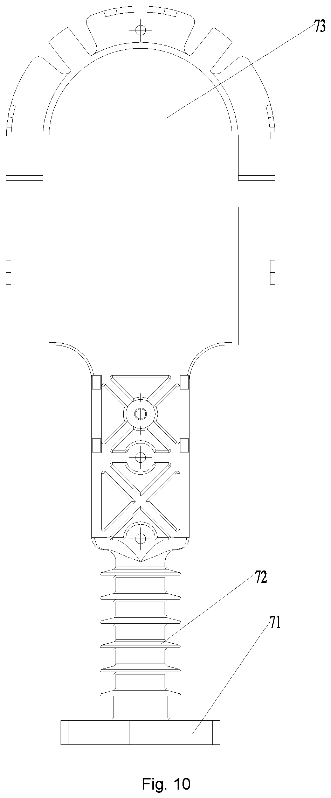

As shown in Fig. 2, Fig. 3, Fig. 4, Fig. 6, Fig. 8, Fig. 9 and Fig. 10, in the embodiments of the present disclosure, the support component 7 includes: a mounting element; and a support element 73, the support element 73 being arranged on the mounting element, the support element 73 having a first side and a second side which are arranged oppositely, the first side being provided with the current-carrying component 11, the second side being provided with a fiber melting disc 5, the support element 73 being provided with a plurality of limiting parts, the limiting parts being located between the first side and the second side, each limiting part being provided with a limiting channel, and the plurality of limiting channels and the plurality of first cable inlets being arranged correspondingly.

Through the above arrangement, the plurality of optical cables 4 enter the plurality of limiting channels respectively through the plurality of first cable inlets. In this way, the limiting parts can play a role in limiting the optical cables 4, so as to facilitate subsequent splicing of the plurality of optical cables 4.

Specifically, in the embodiments of the present disclosure, the fiber melting disc 5 is fixedly connected to the support component 7, a fusion point of two optical cables 4 to be spliced is sleeved with a heat shrinkable tube to protect optical fibers, and a specific structure of the fiber melting disc 5 can refer to the prior art and will not be repeated here.

Specifically, in the embodiments of the present disclosure, the support element 73 is a support plate, the first side of the support element 73 is provided with a plurality of clamping blocks 74, the current-carrying component 11 is provided with a plurality of slots, and the plurality of clamping blocks and the plurality of slots are correspondingly matched to connect the current-carrying component 11 with the support component 7.

Preferably, in the embodiments of the present disclosure, two limiting parts are provided.

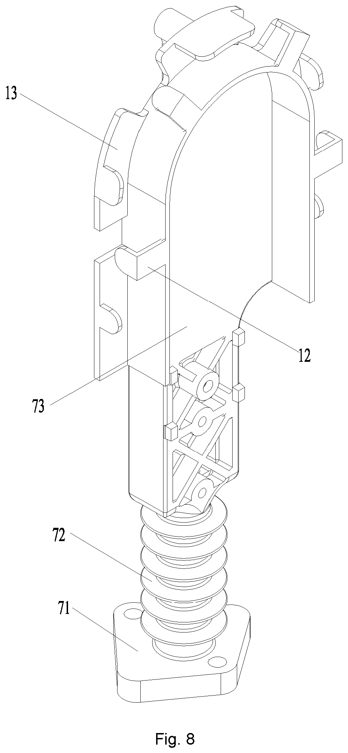

As shown in Fig. 8, in the embodiments of the present disclosure, the limiting parts include a plurality of first limiting plates 12 and a plurality of second limiting plates 13, configured to form the limiting channels, and the first limiting plates 12 and the second limiting plates 13 are alternately arranged along an extending direction of the optical cables 4.

In the above technical solution, the alternating arrangement of the first limiting plates 12 and the second limiting plates 13 can form the limiting channels, and each optical cable 4 can be fixed in the support component 7 through the corresponding first limiting plate 12 and the second limiting plate 13 from the corresponding first cable inlet, so as to limit the optical cable 4.

Specifically, as shown in Fig. 8, in the embodiments of the present disclosure, each of the first limiting plate 12 and the second limiting plate 13 includes a first plate segment and a second plate segment which have an included angle, the first plate segment of the first limiting plate 12 is connected to the first side of the support element 73, the second plate segment of the first limiting plate 12 is arranged towards the limiting channel, the first plate segment of the second limiting plate 13 is connected to the second side of the support element 73, and the second plate segment of the second limiting plate 13 is arranged towards the limiting channel.

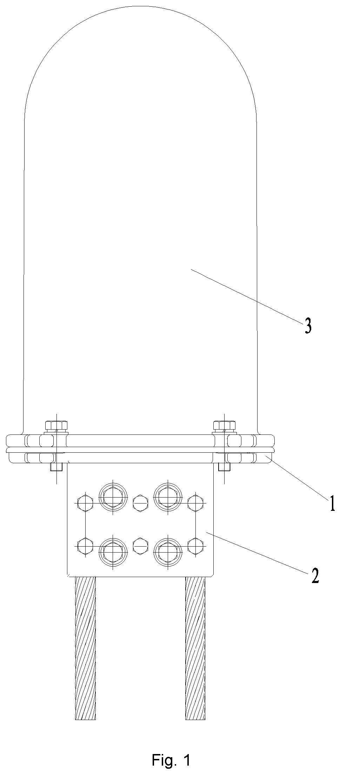

As shown in Fig. 1 to Fig. 6, in the embodiments of the present disclosure, the housing includes a base 1 and a cap cylinder 3, the base 1 is connected to the cap cylinder 3, the support component 7 is arranged on the base 1, the base 1 is provided with the plurality of first cable inlets, and the support component 7 and the current-carrying component 11 are located in the cap cylinder 3.

Through the above arrangement, on the one hand, the plurality of first cable inlets of the base 1 can fix the plurality of optical cables 4, and the plurality of optical cables 4 can pass through the plurality of limiting channels from the plurality of first cable inlets and then are connected to the fiber melting disc 5; and on the other hand, the cap cylinder 3 can achieve physical isolation between the internal and external spaces of the joint box for the OPGW ice-melting optical cable to protect internal components of the joint box for the OPGW ice-melting optical cable, so as to avoid the influence of external environmental factors on the internal components, thereby prolonging the service life of the joint box for the OPGW ice-melting optical cable.

As shown in Fig. 3, Fig. 4, Fig. 6, Fig. 8, Fig. 9, Fig. 10 and Fig. 11, in the embodiments of the present disclosure, at least part of the mounting element is provided with a plurality of umbrella-shaped structures 72, and the plurality of umbrella-shaped structures 72 are spaced apart from each other along an axis direction of the mounting element.

Through the above arrangement, when the base 1 is made of a metal material, the plurality of umbrella-shaped structures 72 can increase the creep-age distance, thereby avoiding current breakdown between the metal base 1 and the current-carrying component 11.

Specifically, in the embodiments of the present disclosure, the umbrella-shaped structure 72 is an umbrella skirt.

Specifically, in the embodiments of the present disclosure, the inner wall of the first cable inlet and the outer wall of the conductive layer 44 of the optical cable 4 are sealed through a conical sealing plug.

Specifically, in the embodiments of the present disclosure, the mounting element further includes a mounting seat 71 and a support column, the support column is provided with a plurality of umbrella-shaped structures 72, the mounting seat 71 is connected to the base 1, and the support element 73 is connected to the support column.

As shown in Fig. 1, Fig. 2, Fig. 4, Fig. 5 and Fig. 6, in the embodiments of the present disclosure, the base 1 is provided with an annular groove, and the joint box for the OPGW ice-melting optical cable further includes: a sealing ring 9, the sealing ring 9 being located between the cap cylinder 3 and the base 1, and the sealing ring 9 being used for sealed connection between the cap cylinder 3 and the base 1; and an annular sealing element 10, the annular sealing element 10 being located in the annular groove, the annular sealing element 10 being located on an outer side of the sealing ring 9 along a radial direction of the cap cylinder 3, and the annular sealing element 10 being used for connecting the cap cylinder 3 and the base 1 in a sealed manner.

In the above technical solution, by providing a dual-sealing structure of the sealing ring 9 and the annular sealing element 10, the cap cylinder 3 and the base 1 can be sealed, thereby improving the sealing performance of the joint box for the OPGW ice-melting optical cable.

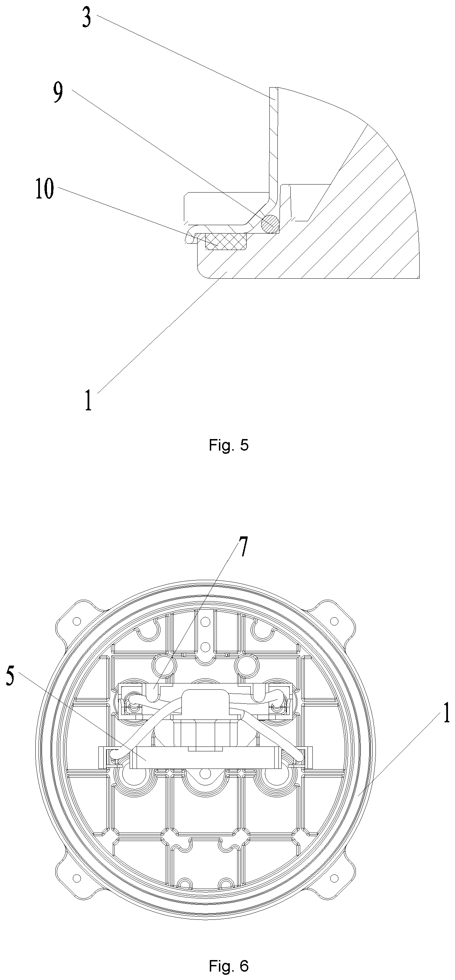

Specifically, in the embodiments of the present disclosure, the depth of the annular groove is less than the height of the annular sealing element 10 (the height of the annular sealing element 10 in a vertical direction in Fig. 5). In this way, the annular sealing element 10 can be compressed in the annular groove, so that the cap cylinder 3 and the base 1 are sealed through the annular sealing element 10.

Specifically, in the embodiments of the present disclosure, the sealing ring 9 is an O-ring, and the annular sealing element 10 is a flat washer.

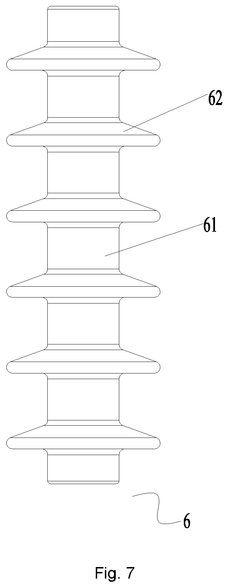

As shown in Fig. 1, Fig. 2, Fig. 3, Fig. 4, Fig. 6 and Fig. 7, in the embodiments of the present disclosure, the joint box for the OPGW ice-melting optical cable further includes a plurality of insulating sleeves 6, each insulating sleeve 6 is arranged on the base 1, each insulating sleeve 6 is located between the base 1 and the current-carrying component 11, the plurality of insulating sleeves 6 and the plurality of first cable inlets are arranged correspondingly, and the each insulating sleeve 6 includes a main body 61; and a plurality of umbrella-shaped elements 62 located at the outer periphery of the main body 61, the plurality of umbrella-shaped elements 62 being spaced apart from each other along an axis direction of the main body 61.

In the above technical solution, by providing the plurality of umbrella-shaped elements 62, the creep age distance can be further increased to avoid the phenomenon of insufficient creep age distance of the optical cable 4, thereby improving the electrical insulation performance. In addition, when the base 1 is made of a metal material, the current breakdown between the metal base 1 and the current-carrying component 11 can be avoided, thereby improving the safety of the joint box for the OPGW ice-melting optical cable during ice melting operation.

Specifically, in the embodiments of the present disclosure, insulating lubrication oil can be coated on the insulating layer 43 of the optical cable 4 before mounting, so that the mounting is more convenient.

As shown in Fig. 1 to Fig. 7, in the embodiments of the present disclosure, the base 1 is made of a metal material, and/or the cap cylinder 3 is made of a non-metal material.

Through the above arrangement, on the one hand, the base 1 can have a higher carrying capacity; and on the other hand, in a high-voltage power environment, the non-metallic cap cylinder 3 can effectively prevent an electrical short circuit between an internal electrified body (the conductive layer of the optical cable 4) of the joint box for the OPGW ice-melting optical cable and an external metal structure (such as a tower), thereby improving the overall electrical safety of the joint box for the OPGW ice-melting optical cable.

Specifically, in the embodiments of the present disclosure, the insulating sleeve 6 is made of an elastic material, and the inner diameter of the insulating sleeve 6 is D; and the diameter of the insulating layer 43 of the optical cable 4 is d, and D is less than d. The insulating sleeve 6 has a certain degree of elasticity, so the insulating sleeve 6 can be sleeved on an outer periphery of the insulating layer 43.

Preferably, in the embodiments of the present disclosure, the insulating sleeve 6 is made of a silicone material.

Specifically, in the embodiments of the present disclosure, because the base 1 is made of a metal material, the current-carrying component 11 is also made of a metal material, and the current-carrying component 11 carries a current, by providing the insulating sleeve 6, the creepage distance can be increased to improve the insulating effect.

Specifically, in the embodiments of the present disclosure, the cap cylinder 3 is made of a sheet molding compound (SMC), the strength of the SMC is similar to that of an aluminum cylinder cap, and the strength can reach 100 Mpa or more.

In an embodiment, the base 1 is made of a non-metal material.

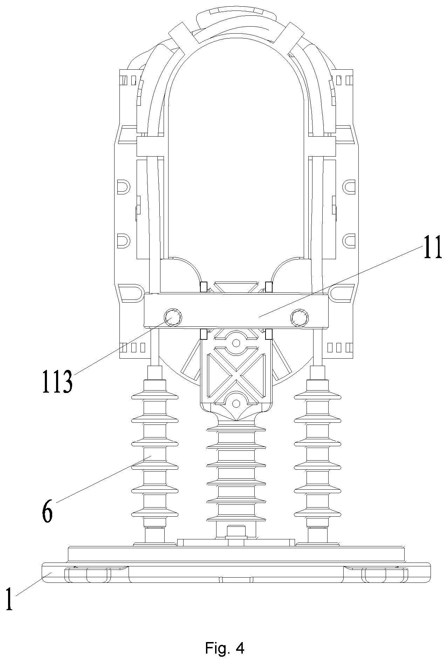

As shown in Fig. 4, in the embodiments of the present disclosure, the current-carrying component 11 is provided with a plurality of clamping cavities, and the plurality of clamping cavities and the plurality of first cable inlets are arranged correspondingly.

In the above technical solution, by providing the clamping cavities on the current-carrying component 11, each optical cable 4 can enter the corresponding clamping cavity through the corresponding first cable inlet and is closely attached to the inner wall of the corresponding clamping cavity, thereby achieving electrical connection between the plurality of optical cables 4 and the current-carrying component 11. By electrifying the conductive layer of one of the plurality of optical cables 4, the current can flow from the optical cable 4 to the rest of the optical cables 4 by the current-carrying component 11, so as to form a conductive channel. In this way, the inside of the joint box for the OPGW ice-melting optical cable can play a role in carrying a current, so as to melt ice on the plurality of optical cables 4.

Preferably, in the embodiments of the present disclosure, two clamping cavities are provided.

### Embodiment 1

As shown in Fig. 3 and Fig. 4, in Embodiment 1 of the present disclosure, the current-carrying component 11 includes: a first clamping element, the first clamping element being provided with first grooves; a second clamping element, the second clamping element being provided with second grooves, the plurality of second grooves and the plurality of first grooves being arranged correspondingly, and each second groove and the corresponding first groove forming one clamping cavity; and a first connecting element 113 configured to connect the first clamping element and the second clamping element.

Through the above arrangement, the first groove of the first clamping element can correspondingly communicate with the second groove of the second clamping element to form the clamping cavity. In this way, the conductive layer 44 of the optical cable 4 can be closely attached to the inner wall of the corresponding clamping cavity. By electrifying the conductive layer of the optical cable 4, the conductive layer of the optical cable 4 transfers the current to the current-carrying component 11 and transfers it from the current-carrying component 11 to the conductive layer 44 of the rest of un-electrified optical cables 4. In this way, the inside of the joint box for the OPGW ice-melting optical cable can play a role in carrying a current, so as to melt ice on the plurality of optical cables 4.

Specifically, in Embodiment 1 of the present disclosure, two first connecting elements 113 are provided, and the each first connecting element 113 is a bolt. The first clamping element and the second clamping element have excellent current-carrying performance after being locked by the first connecting elements 113. When a heavy current is applied during ice melting, both the first clamping element and the second clamping element are clamping blocks. In this way, the temperature of the current-carrying component 11 is much lower than the temperature of the conductive layer 44 of the optical cable 4.

Specifically, in Embodiment 1 of the present disclosure, both the first groove and the second groove are arc-shaped grooves, and the shape of the clamping cavity formed by the two arc-shaped grooves is adapted to an arc-shaped surface of the conductive layer 44 of the optical cable 4.

### Embodiment 2

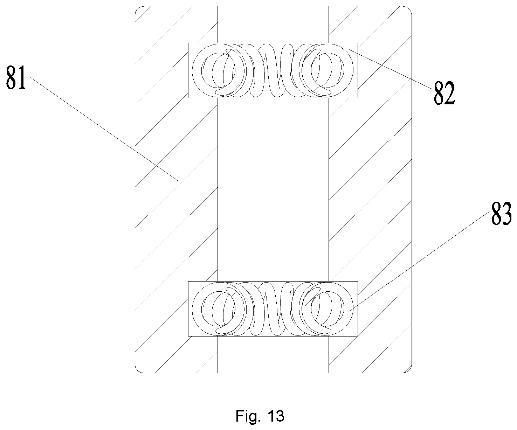

The difference between Embodiment 2 and Embodiment 1 is that the specific structures of the current-carrying components 11 are different. As shown in Fig. 13, the current-carrying component 11 includes a second connecting element, a plurality of through holes being provided in the second connecting element; and a plurality of annular contact fingers 83, the plurality of annular contact fingers 83 being provided in each through hole, the second connecting element being electrically connected to the plurality of annular contact fingers 83, clamping cavities being formed in the annular contact fingers 83, and the plurality of annular contact fingers 83 being spaced apart from each other along an axis direction of the corresponding through hole.

Through the above arrangement, the annular contact finger 83 can be clamped at the outer periphery of the conductive layer 44 of the optical cable 4, and the conductive layer 44 of the optical cable 4 can be in close contact with the inner wall of the annular contact finger 83. In this way, the optical cable 4 can be fixed in the clamping cavity, and the conductive layer 44 of the optical cable 4 can be electrically connected to the annular contact finger 83. Because the second connecting element is electrically connected to the plurality of annular contact fingers 83, the conductive layers 44 of the plurality of optical cables 4 can be electrically connected to the second connecting element through the plurality of annular contact fingers 83. Therefore, after the conductive layer 44 of one of the plurality of optical cables 4 is electrified, the current can also flow through the conductive layers 44 of the rest of optical cables 4 in the plurality of optical cables 4. In this way, the inside of the joint box for the OPGW ice-melting optical cable can not only play a role in carrying a current, but also melt the ice and snow on the outer periphery of the plurality of optical cables 4.

Specifically, in Embodiment 2 of the present disclosure, the annular contact finger 83 is a spring contact finger.

As shown in Fig. 13, in Embodiment 2 of the present disclosure, the current-carrying component 11 further includes a plurality of mounting cylinders 81, the plurality of mounting cylinders 81 are correspondingly mounted in the plurality of through holes, an inner wall of a mounting hole of each mounting cylinder 81 is provided with a plurality of annular limiting grooves 82, an outer end of each annular contact finger 83 is located in a corresponding annular limiting groove 82, an inner end of the each annular contact finger 83 protrudes from the corresponding annular limiting groove 82, and the plurality of annular contact fingers 83 are electrically connected to the second connecting element through the plurality of mounting cylinders 81.

Through the above arrangement, the annular contact finger 83 can provide multi-point contact, and even when the joint box for the OPGW ice-melting optical cable is subjected to vibration or slight displacement, good electrical contact can be maintained, thereby improving the stability of electrical connection. The elastic property of the annular contact finger 83 can adapt to conductors of different diameters, so as to ensure reliable contact. In addition, the inner end of the annular contact finger 83 protrudes from the annular limiting groove 82, which can form stable electrical connection, so as to reduce the maintenance work caused by poor contact. The elasticity and self-locking property of the annular contact finger 83 can maintain a good contact state for a long time, thereby reducing the need for regular inspection and adjustment.

It should be noted that, in the embodiments of the present disclosure, the inner end of the annular contact finger 83 refers to the end of the annular contact finger 83 facing the axis of the through hole, and the outer end of the annular contact finger 83 refers to the end of the annular contact finger 83 away from the axis of the through hole.

The other structures in Embodiment 2 of the present disclosure are the same as those in Embodiment 1, and will not be repeated here.

Specifically, in the embodiments of the present disclosure, the maximum withstand rated voltage designed by the present disclosure is 25 kV, the 1-minute power frequency withstand voltage reaches 45 kV, and a certain length of distance needs to be reserved for the insulating layer 43 of the optical cable 4. Due to the closed space inside the joint box for the OPGW ice-melting optical cable, which is not affected by outdoor factors such as rainwater, the insulation distance is greatly reduced compared to outdoor conditions.

Specifically, in the embodiments of the present disclosure, the OPGW optical cable capable of melting ice in the present disclosure achieves current carrying and electrical performance inside the joint box for the OPGW ice-melting optical cable, and the OPGW optical cable capable of melting ice can melt ice in the case of tower-by-tower grounding. After experimental verification, the power frequency 1-minute withstand voltage can reach ±50 kV, meeting the working requirement of ±25 kV ice melting voltage.

Specifically, in the embodiments of the present disclosure, in order to reduce the mounting resistance of the insulating sleeve 6, insulating oil is coated to the insulating layer 43 of the optical cable 4.

As shown in Fig. 1 and Fig. 2, an embodiment of the present disclosure provides a joint device. The joint device includes the above joint box for the OPGW ice-melting optical cable and an optical cable clamp 2, and the optical cable clamp 2 is connected to the above joint box for the OPGW ice-melting optical cable.

As shown in Fig. 1 to Fig. 3, in the embodiments of the present disclosure, the optical cable clamp 2 includes a third connecting element 21 connected to the base 1, the third connecting element 21 being provided with a plurality of second cable inlets spaced apart from each other, and the plurality of second cable inlets and the plurality of first cable inlets being arranged correspondingly; and a fourth connecting element 22, the fourth connecting element 22 includes a first plate segment 221, a second plate segment 222 and a third plate segment 223 which are connected and have included angles to enclose a clamping space, the first plate segment 221 is connected to the base 1, and the third plate segment 223 is connected to the third connecting element 21.

In the above technical solution, on the one hand, the plurality of optical cables 4 enter the plurality of limiting channels through the plurality of first cable inlets from the plurality of second cable inlets of the third connecting element 21, and enter the fiber melting disc 5 through the plurality of limiting channels, so as to achieve fusion splicing on the fiber melting disc 5; and on the other hand, by providing the fourth connecting element 22, the joint device can be connected to a tower.

Specifically, in the embodiments of the present disclosure, two second cable inlets are provided, and the third connecting element 21 is connected to the base 1 through a bolt.

Specifically, in the embodiments of the present disclosure, the first plate segment 221 of the fourth connecting element 22 is connected to the base 1 through a bolt, the second plate segment 222 is provided with a mounting hole, the joint device further includes a fixing clamp, and the fixing clamp is provided with a mounting hole. The bolt sequentially passes through the mounting hole on the second plate segment 222 and the mounting hole of the fixing clamp to fix the fixing clamp on the second plate segment 222, thereby clamping the joint device on the tower by using the fixing clamp.

Specifically, in the embodiments of the present disclosure, the specific structure of the optical cable clamp 2 can refer to the prior art, and will not be repeated here.

The above joint device has all advantages of the above joint box for the OPGW ice-melting optical cable, which will not be repeated here.

From the above descriptions, it can be seen that the above embodiments of the present disclosure achieve the following technical effects: the current-carrying component is provided, and the current-carrying component is electrically connected to the conductive layers of the plurality of optical cables. In this way, by electrifying the conductive layer of one of the plurality of optical cables, the current can flow from one of the plurality of optical cables to the rest of the plurality of optical cables by the current-carrying component, so as to conduct the plurality of optical cables. The inside of the joint box for the OPGW ice-melting optical cable can play a role in carrying a current, and the current can flow through all conductive layers of the plurality of optical cables. In this way, a conductive path can be formed, and the outer periphery of the conductive layer of the each optical cable through which the current flows will generate heat, so as to melt the ice and snow covering the optical cable.

The above descriptions are only preferred embodiments of the present disclosure and are not intended to limit the present disclosure, and those skilled in the art can make various modifications and changes to the present disclosure. Any modifications, equivalent replacements, improvements and the like made within the spirit and principle of the present disclosure shall fall within the scope of protection of the present disclosure.

## Claims

1. A joint box for an OPGW ice-melting optical cable, comprising:
a housing, the housing being provided with a plurality of first cable inlets spaced apart from each other, and a plurality of optical cables (4) being capable of extending into the housing through the plurality of first cable inlets;
a support component (7) arranged in the housing, the support component (7) being configured to support the optical cables (4) in the housing, and the support component (7) being made of an insulating material; and
a current-carrying component (11) arranged on the support component (7), the current-carrying component (11) being made of a conductive material, and the current-carrying component (11) being configured to be electrically connected to conductive layers (44) of the plurality of optical cables (4), wherein
the support component (7) comprises a mounting element and a support element (73), the support element (73) being arranged on the mounting element, the support element (73) having a first side and a second side which are arranged oppositely, the first side being provided with the current-carrying component (11), the second side being provided with a fiber melting disc (5), the support element (73) being provided with a plurality of limiting parts, the plurality of limiting parts being located between the first side and the second side, each of the plurality of limiting parts being provided with a limiting channel, and a plurality of limiting channels and the plurality of first cable inlets being arranged correspondingly.

2. The joint box for the OPGW ice-melting optical cable according to claim 1, wherein the current-carrying component (11) is provided with a plurality of clamping cavities, and the plurality of clamping cavities and the plurality of first cable inlets are arranged correspondingly.

3. The joint box for the OPGW ice-melting optical cable according to claim 2, wherein the current-carrying component (11) comprises:
a first clamping element, the first clamping element being provided with a plurality of first grooves;
a second clamping element, the second clamping element being provided with a plurality of second grooves, the plurality of second grooves and the plurality of first grooves being arranged correspondingly, and each of the plurality of second grooves and a corresponding first groove forming one clamping cavity of the clamping cavities; and
a first connecting element (113) configured to connect the first clamping element and the second clamping element.

4. The joint box for the OPGW ice-melting optical cable according to claim 2, wherein the current-carrying component (11) comprises:
a second connecting element, a plurality of through holes being provided in the second connecting element; and
a plurality of annular contact fingers (83), each through hole is provided with the plurality of annular contact fingers (83), the second connecting element being electrically connected to the plurality of annular contact fingers (83), clamping cavities being formed in the annular contact fingers (83), and the plurality of annular contact fingers (83) being spaced apart from each other along an axis direction of a corresponding through hole.

5. The joint box for the OPGW ice-melting optical cable according to claim 4, wherein the current-carrying component (11) further comprises a plurality of mounting cylinders (81), the plurality of mounting cylinders (81) are correspondingly mounted in the plurality of through holes, an inner wall of each mounting cylinder (81) is provided with a plurality of annular limiting grooves (82), an outer end of each annular contact finger (83) is located in a corresponding annular limiting groove (82), an inner end of the each annular contact finger (83) protrudes from the corresponding annular limiting groove (82), and the plurality of annular contact fingers (83) are electrically connected to the second connecting element through the plurality of mounting cylinders (81).

6. The joint box for the OPGW ice-melting optical cable according to any one of claims 1 to 5, wherein the limiting parts comprise a plurality of first limiting plates (12) and a plurality of second limiting plates (13), configured to form the limiting channels, and the first limiting plates (12) and the second limiting plates (13) are alternately arranged along an extending direction of the optical cables (4).

7. The joint box for the OPGW ice-melting optical cable according to any one of claims 1 to 5, wherein at least part of the mounting element is provided with a plurality of umbrella-shaped structures (72), and the plurality of umbrella-shaped structures (72) are spaced apart from each other along an axis direction of the mounting element.

8. The joint box for the OPGW ice-melting optical cable according to any one of claims 1 to 5, wherein the housing comprises a base (1) and a cap cylinder (3), the base (1) is connected to the cap cylinder (3), the support component (7) is arranged on the base (1), the base (1) is provided with the plurality of first cable inlets, and the support component (7) and the current-carrying component (11) are located in the cap cylinder (3).

9. The joint box for the OPGW ice-melting optical cable according to claim 8, wherein the base (1) is provided with an annular groove, and the joint box for the OPGW ice-melting optical cable further comprises:
a sealing ring (9), the sealing ring (9) being located between the cap cylinder (3) and the base (1), and the sealing ring (9) being used for sealed connection between the cap cylinder (3) and the base (1); and
an annular sealing element (10), the annular sealing element (10) being located in the annular groove, the annular sealing element (10) being located on an outer side of the sealing ring (9) along a radial direction of the cap cylinder (3), and the annular sealing element (10) being used for sealed connection between the cap cylinder (3) and the base (1).

10. The joint box for the OPGW ice-melting optical cable according to claim 8, wherein the joint device for the OPGW ice-melting optical cable further comprises a plurality of insulating sleeves (6), each of the plurality of insulating sleeves (6) is arranged on the base (1), the each of the plurality of insulating sleeves (6) is located between the base (1) and the current-carrying component (11), the plurality of insulating sleeves (6) and the plurality of first cable inlets are arranged correspondingly, and the each of the plurality of insulating sleeves (6) comprises:
a main body (61); and
a plurality of umbrella-shaped elements (62) connected to an outer periphery of the main body (61), the plurality of umbrella-shaped elements (62) being spaced apart from each other along an axis direction of the main body (61).

11. The joint box for the OPGW ice-melting optical cable according to claim 8, wherein the base (1) is made of a metal material; and/or the cap cylinder (3) is made of a non-metal material.

12. A joint device, comprising an optical cable clamp (2) and the joint box for the OPGW ice-melting optical cable according to any one of claims 1 to 11, wherein the optical cable clamp (2) is connected to the joint box for the OPGW ice-melting optical cable.

13. The joint device according to claim 12, wherein the optical cable clamp (2) comprises:
a third connecting element (21) connected to the base (1), the third connecting element (21) being provided with a plurality of second cable inlets spaced apart from each other, and the plurality of second cable inlets and the plurality of first cable inlets being arranged correspondingly; and
a fourth connecting element (22), the fourth connecting element (22) comprising a first plate segment (221), a second plate segment (222) and a third plate segment (223) which are sequentially connected and have included angles to enclose a clamping space, the first plate segment (221) being connected to the base (1), and the third plate segment (223) being connected to the third connecting element (21).
